# EUROPÄISCHE PATENTANMELDUNG

(11) **EP 2 236 538 A1**
(43) Veröffentlichungstag der Anmeldung: **06.10.2010**
(21) Anmeldenummer: 10156588.5
(22) Anmeldetag: 16.03.2010
(51) Int. Cl.: C08G 18/70, C08G 18/63

(54) **Polyurethanhybridmaterialien**

(30) Priorität: 27.03.2009 EP 09156481
(71) Anmelder: BASF SE, 67056 Ludwigshafen (DE)
(72) Erfinder: Kamm, Andre, 49448, Lemförde (DE); Cabrera, Andres, 49080, Osnabrück (DE)

(57) **Zusammenfassung**

Die vorliegende Erfindung betrifft eine Lösung, die Polyisocyanat, thermoplastisches Polymer und im Wesentlichen keine weiteren Lösungsmittel enthält. Weiter betrifft die vorliegende Erfindung ein System, enthaltend eine solche Lösung, zur Herstellung von Polyurethan-Hybridmaterialien und ein Verfahren zur Herstellung von solchen Polyurethan-Hybridmaterialien, bei dem man diese Lösung einsetzt.

## Beschreibung

Die vorliegende Erfindung betrifft eine Lösung, die Polyisocyanat, thermoplastisches Polymer und im Wesentlichen keine weiteren Lösungsmittel enthält. Weiter betrifft die vorliegende Erfindung ein System, enthaltend eine solche Lösung, zur Herstellung von Polyurethan-Hybridmaterialien und ein Verfahren zur Herstellung von solchen Polyurethan-Hybridmaterialien, bei dem man diese Lösung einsetzt.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Hybridmaterialien aus Polyurethan und einem weiteren Polymer sind bekannt. Diese werden beispielsweise zur Verbesserung der mechanischen Eigenschaften eingesetzt. So beschreibt WO 2007/057242 ein Verfahren, bei dem transparentes thermoplastisches Polyurethan mit Polymethylmethacrylat im Extruder geblendet wird um ein Produkt mit verbesserter Kaltschlagzähigkeit zu erhalten. Der Nachteil dieses Verfahrens ist, dass es sich nur auf lineare, unvernetzte Polyurethane anwenden lässt.

DE 2435684 beschreibt die Zugabe von Etylencopolymerisaten zu thermoplastischen Polyurethanen, um ein Zusammenbacken aufgerollter Folien aus thermoplastischem Polyurethan zu verhindern. Dabei wird neben der klassischen Extrusion ein Verfahren zum Blenden von löslichen thermoplastischen Polyurethanen mit Ethylencopolymerisaten offenbart, bei dem die Blends durch das Mischen einer Lösung des thermoplastischen Polyurethans sowie des Ethylencopolymers hergestellt werden. Eine weitere Möglichkeit ist das Mischen einer Lösung des Ethylencopolymers mit einem Polyisocyanatprepolymer und der anschließenden Umsetzung mit einem Kettenverlänger, um das thermoplastische Polyurethan zu erhalten. Als geeignete Lösemittel offenbart DE 2435684 Toluol oder Benzol. Nachteil dieser Verfahren ist der Einsatz von Lösemittel, die zur weiteren Verarbeitung aus der Mischung/Blend entfernt werden müssen.

In DE 69600279 wird die Herstellung von geschäumten Schmelzklebern aus Urethanprepolymeren mit niedermolekularen Polymeren auf Basis von Methylmethacrylat und Butylmethactylat offenbart. Hierzu wird das Polymer in einer Mischung aus Polyolen oberhalb der Glasübergangstemperatur gelöst/geschmolzen und dann mit Isocyanat zu einem reaktiven Schmelzkleber umgesetzt. In einer weiteren Ausführungsform werden Methylmethacrylat und Butylmethacrylat radikalisch in den Polyolen polymerisiert und anschließend mit dem Isocyanat zum reaktiven Schmelzkleber umgesetzt, der durch Luftfeuchtigkeit oder Wasser aushärtet. In EP 1 036 103 wird ein analoger Schmelzkleber mit niedermolekularen Copolymeren auf Basis von Alkylestern der (Meth)acrylsäure und Monomeren mit aktiver Wasserstoffgruppe hergestellt. Auch in diesem Verfahren wird das niedermolekulare Polymer zunächst oberhalb der Glasübergangstemperatur im Polyol gelöst/geschmolzen und dann mit Isocyanat reagiert. Nachteile dieser Verfahren ist, dass nur niedermolekulare Polymere verwendet werden können, die Produkte bei Raumtemperatur fest sind und nur über einen geringen Anteil an freien Isocyanat verfügen.

Eine weitere in der Literatur beschriebe Möglichkeit ist die Herstellung von Interpenetrierenden Polymer Netzwerken (Interpenetrating Polymer Networks). In der Literatur werden zwei verschiedene Verfahren zur Herstellung solche Netzwerke diskutiert. So wird bei einem zwei Schrittprozess zunächst ein Netzwerk des einen Polymers aufgebaut. Im zweiten Schritt wird das Netzwerk mit einer Lösung des zweiten Monomers gequollen und das Monomer anschließend im Netzwerk des polymerisiert. Daneben wird auch ein Einschrittprozess beschrieben. Hierbei werden alle Komponenten (Monomere) gemischt und parallel polymerisiert/reagiert. (J. W. Nicholson J. Mater. Chem. 2006, 16, 3867-3874). So werden in US 5539053 monomeres Methylmethacrylat, Isocyanat, Polyol und Katalysator mit Kettenverlängerern, Vernetzern, monomeren Methylmethacrylat und Polymersiationsstarter gemischt und kompakte Platten hergestellt. In GB 2086927 wird die Herstellung von hydrophilen Polyurethane/Diacrylat semi-IPN beschrieben. Hierbei wird zunächst ein Polyurethannetzwerk aufgebaut, welches dann mit einer ethanolischen Lösung von Diethylengylcoldiacrylate und einem Radikalstarter umgesetzt wird. Nachteilig an diesen Verfahren zur Herstellung der Interpenetrierenden Netzwerke ist, dass der Einsatz von Lösemitteln nötig ist, die Herstellung relativ lange Reaktionszeiten erfordert und dass die Herstellung sich auf kompakte Materialien beschränkt.

Die Aufgabe der vorliegenden Erfindung bestand darin, eine neue Möglichkeit für die Herstellung von Hybridmaterialien aus Polyurethan und anderen thermoplastischen Polymeren zu finden, welche ohne die oben beschriebenen Nachteile auskommt.

Diese Aufgabe wird gelöst durch ein Verfahren zur Herstellung von Polyurethan-Hybridmaterialien bei dem man (a) eine Lösung, enthaltend Polyisocyanat und thermoplastisches Polymer, wobei die Lösung im Wesentlichen keine weiteren Lösungsmittel enthält mit (b) mindestens einer höhermolekularen Verbindung mit mindestens zwei reaktiven Wasserstoffatomen, und gegebenenfalls (c) niedermolekularem Kettenverlängerungsmittel und/oder Vernetzungsmittel, (d) Katalysator, (e)Treibmittel und (f) sonstigen Zusatzstoffe zu einer Reaktionsmischung vermischt und die Reaktionsmischung zum Polyurethan-Hybridmaterial ausreagieren lässt.

Die in der Lösung (a) enthaltenen Polyisocyanate sowie die weiteren Ausgangsstoffe (b) bis (f) umfassen alle zur Herstellung von Polyurethanen übliche Ausgangsstoffe. Dabei können beispielsweise übliche Ausgangsstoffe zur Herstellung von Duromeren, Gießelastomeren oder thermoplastischen Polyurethanen, Schaumstoffen auf Basis von Polyurethan, wie Weichschaumstoffe, Halbhartschaumstoffe, Hartschaumstoffe oder Integralschaumstoffe sowie Polyurethanbeschichtungen und Bindemitteln eingesetzt werden. Solche Formulierungen sind bekannt und beispielsweise im "Kunststoffhandbuch, Band 7, Polyurethane", Carl Hanser Verlag, 3. Auflage 1993, beschrieben.

Die zur Herstellung der erfindungsgemäßen Polyurethan-Hybridmaterialien eingesetzten thermoplastischen Polymere umfassen alle bekannten thermoplastischen Polymere. Dabei wird unter einem thermoplastischen Polymer ein Polymer verstanden, welches einen linearen oder verzweigten Kettenaufbau aufweist, in (organischen) Lösemitteln löslich ist und oberhalb der der Gebrauchstemperatur einen Fließübergangsbereich besitzt. Das thermoplastische Polymer im Sinn der vorliegenden Erfindung umfasst dabei Polymere, die aus mindestens 4 gleichen oder unterschiedlichen Monomereinheiten ausgebaut sind und ein Molekulargewicht von mindestens 500 g/mol aufweisen. Vorzugsweise ist das thermoplastische Polymer aus mindestens 6, insbesondere aus mindestens 10 Monomereinheiten aufgebaut. Weiter weist das thermoplastische Polymer vorzugsweise ein Molekulargewicht von mindestens 1000 g/mol, insbesondere von mindestens 5000 g/mol auf. In einer besonders bevorzugten Ausführungsform ist das gewichtsmittlere Molekulargewicht größer 40.000 g/mol, insbesondere größer 50.000 g/mol.

Vorzugssweise können als thermoplastisches Polymer Homopolymere der C1-bis C20 Ester der Acrylsäure oder Methacrylsäure wie zum Beispiel Polymethyl(meth)acrylat, Polyethyl(meth)acrylat, Polypropyl(meth)acrylat oder Polybutyl(meth)acrylat, Copolymere der C1-bis C20 Ester der Acrylsäure oder Methacrylsäure, beispielsweise mit Hydroxyacrylaten und -methacrylaten wie Hydroxyethylacrylat, Hydroxyethylmethacrylat, Hyrodxypropylacrylat, Hydroxyproylmethacrylat, Hydroxybutylacrylat, Hydroxybutylmethacrylat, Hydroxypentylmethacrylat, Hydroxypentylmethacrylat, Hydroxyhexylacrylat, Hydroxyhexylmethacrylat, mit Acrylsäue oder Methacrylsäure, mit C1- bis C20-Ester der von Acrylsäure oder Methacrylsäure, Ester der Acrylsäure oder Methyacrylsäure mit Polyolen auf Basis von Ethylen- und/oder Proylenoxid, mit Styrol, Acrylnitril, Maleinsäure bzw. Maleinsäureanhydrid, Crotonsäure, Fumarsäure, Itaconsäure, Acrylamid, N,N-Dimethylacrylamid, N,N-Dibenzylacrylamid, N-Butylacrylamid, Methacryloylformamid und ähnliche Derivate; Vinylester, Vinylether, Vinylketone, etc. wie Vinylacetat, Vinylbutyrat, Isopropenylacetat, Vinylformiat, Vinylacrylate, Vinylmethacrylat, Vinylmethoxyacetat, Vinylbenzoat, Vinyltoluol, Vinylnaphtalin, Vinylmethylether, Vinylpropylether, Vinylbutylether, Vinyl-2-ethylhexylether, Vinylphenylether, Vinyl-2-methoxyethylether, Methoxybutadien, Vinyl-2-butoxyethylether, 2,4-Dihydro-1,2-Pyran, 2-Butoxy-2'-Vinyloxydiethylether, Vinylmethylketon, Vinylethylketon, Vinylphenyketon, Vinylethylsulfon, N-methyl-N-vinylacetamid, N-vinylpyrrolidon, vinylimidazol oder quaterniertem Vinylimidazol, Dinvinylsulfoxid, Divinylsulfon, Natrium-vinylsulfonat, Methylvinylsulfonat, N-Vinylpyrrol, Vinylphosphonat, und ähnliche Derivate; Dimethylfumarat, Dimethylmaleat, Monomethylitaconat, t-Butylaminoethyl-methacrylat, Dimethylaminoethyl-methacrylat, Glycidylacrylat oder Glycidylmethacrylat, Allylalkohol, Glycolmonoester von Itaconsäure, Butadien oder Isopren, Ethylen oder Propylen eingesetzt werden.

Zur Herstellung der erfindungsgemäßen Lösung (a) wird das thermoplastische Polymer in Polyisocyanat gelöst. Als Polyisocyanat kann dabei jedes zur Herstellung von Polyurethanen bekanntes Polyisocyanat eingesetzt werden. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat (MDI) oder die kernhydrierten analogen Verbindungen, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt wird 4,4'-MDI, 2,2'-MDI, 2,4'-MDI, Polymer-MDI, TDI und/oder HDI und Mischungen der Isocyanate verwendet. Das besonders bevorzugt verwendete 4,4'-MDI kann Anteile von uretdion-, allophanat- oder uretoniminmodifizierte Polyisocyanate enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Das Polyisocyanat kann auch in Form von Polyisocyanatprepolymeren eingesetzt werden. Diese Polyisocyanatprepolymere sind erhältlich, indem vorstehend beschriebene Polyisocyanate im Überschuss, beispielsweise bei Temperaturen von 30 bis 120 °C, bevorzugt bei etwa 80 °C, mit Polyolen zum Prepolymer umgesetzt werden.

Polyole sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole auch die nachfolgend unter (b) beschriebenen Polyole eingesetzt werden.

Gegebenenfalls können der Umsetzung zum Polyisocyanatprepolymer noch Kettenverlängerungsmittel zugegeben werden. Als Kettenverlängerungsmittel für das Prepolymer können alle Kettenverlängerungsmittel, die auch unter (c) beschrieben sind, eingesetzt werden. Dabei sind beispielsweise zweiwertige Alkohole, beispielsweise Dipropylenglykol, Tripropylenglycol und/oder oder die Addukte von Dipropylenglykol mit Alkylenoxiden, bevorzugt Propylenoxid, Ethylenoxid und/oder Mischungen geeignet.

Das verwendete Polyisocyanat weist vorzugsweise einen Isocyanatgehalt von größer 5 Gew.-%, besonders bevorzugt größer 7,5 Gew.-% auf.

Prinzipiell hängt die Wahl des Isocyanats ab von der beabsichtigten Verwendung des Polyurethan-Hybridmaterials. Dennoch wird zur Herstellung der Lösung (a) vorzugsweise 4,4'-MDI oder Mischungen von 4,4'MDI mit 2,4'-MDI oder Polymer-MDI als Polyisocyanat eingesetzt.

Als Lösung (a) werden insbesondere Lösungen aus Polymethylmethacrylat und MDI; Poly(Methylmethacrylat-co-Hydroxyethylacrylat) und MDI; Poly(Methylmethacrylat-co-Hydroxyethylmethacrylat) und MDI; Poly(Methylmethacrylat-co-Acrylsäure) und MDI; Poly(Methylmethacrylat-co-Methacrylsäure) und MDI; Poly(Methylmethacrylat-co-Butylacrylat) und MDI; Poly(Methylmethacrylat-co-Butylmethacrylat) und MDI; Poly(Methylmethacrylat-co-Ethylhexylacrylat) und MDI, Poly(Methylmethacrylat-co-Hydroxyethylmethacrylat-co-Ethylhexylacrylat) und MDI; Poly(Methylmethacrylat-co-Vinylimdazol) mit MDI; Poly(Methylmethacrylat-co-quaterniertem Vinylimidazol) und MDI; Polymethylmethacrylat und MDI; Polybutylmethacrylat und MDI; Poly(Methylmethacrylat-co-Laurylmethacrylat) und MDI; Poly(Methylmethacrylat-co-Styrol) und MDI; Poly(Styrol-co-butadien) und MDI; Poly(Acrylnitril-co-Butadien-co-Polymethylmethacrylat und PMDI; Poly(Methylmethacrylat-co-Hydroxyethylacrylat) und PMDI; Poly(Methylmethacrylat-co-Hydroxyethylmethacrylat) und PMDI; Poly(Methylmethacrylat-co-Acrylsäure) und PMDI; Poly(Methylmethacrylat-co-Methacrylsäure) und PMDI; Poly(Methylmethacrylat-co-Butylacrylat) und PMDI; Poly(Methylmethacrylat-co-Butylmethacrylat) und PMDI; Poly(Methylmethacrylat-co-Ethylhexylacrylat) und PMDI, Poly(Methylmethacrylat-co-Hydroxyethylmethacrlat-co-Ethylhexylacrylat) und PMDI; Poly(Methylmethacrylat-co-Vinylimdazol) mit PMDI; Poly(Methylmethacrylat-co-quaterniertem Vinylimidazol) und PMDI; Polymethylmethacrylat und PMDI; Polybutylmethacrylat und PMDI; Poly(Methylmethacrylat-co-Laurylmethacrylat) und PMDI, oder Mischungen mit TDI, MDI, PMDI oder HDI eingesetzt.

Die erfindungsgemäßen Lösungen enthalten dabei vorzugsweise im Wesentlichen keine weiteren Lösungsmittel. Als Lösungsmittel werden dabei alle üblichen Lösungsmittel angesehen, nicht aber das Isocyanat oder das thermoplastische Polymer selbst. Dabei bedeutet "im Wesentlichen kein weiteres Lösungsmittel", dass die erfindungsgemäße Lösung a) weniger als 2 Gew.-%, besonders bevorzugt weniger als 0,5 Gew.-% und insbesondere weniger als 0,01 Gew.-% Lösungsmittel, bezogen auf das Gesamtgewicht der Lösung (a) enthält. Vorzugsweise werden keine Lösungsmittel zur Herstellung der Lösung (a) zugegeben bzw. sind keine Lösungsmittel in den Ausgangskomponenten zur Herstellung der Lösung (a) enthalten. Lösungsmittelreste, die Herstellungsbedingt in den Ausgangskomponenten zur Herstellung der Lösung (a) enthalten sind, fallen nicht unter diese Beschränkung. Ebenfalls werden das Polyisocyanat selbst oder das thermoplastische Polymer selbst nicht als Lösungsmittel im Sinn dieser Beschränkung angesehen.

Zur Herstellung der Lösung (a) werden das thermoplastische Polymer und das Polyisocyanat vermischt und gegebenenfalls erwärmt. Vorzugsweise wird nach dem Vermischen auf eine Temperatur von 20 bis 200 °C, besonders bevorzugt 30 bis 150 und insbesondere auf 60 bis 120 °C erwärmt.

Vorzugsweise enthält die Lösung (a) neben Polyisocyanat und thermoplastischem Polymer weniger als 5 Gew.-%, besonders bevorzugt weniger als 2 Gew.-% und insbesondere weniger als 1 %, bezogen auf das Gesamtgewicht der Lösung (a), weitere Stoffe.

Der Anteil an thermoplastischem Polymer in der Lösung (a) beträgt vorzugsweise 0,1 bis 50 Gew.-%, besonders bevorzugt 0,5 bis 30 Gew.-% und insbesondere 1 bis 20 Gew.-%, bezogen auf das Gesamtgewicht von Polyisocyanats und des thermoplastischen Polymers.

Ein weiteres Verfahren zur Herstellung der Lösung (a) ist es, Monomere des thermoplastischen Polymers in dem Isocyanat zu lösen und diese anschließend radikalisch zu polymerisieren. Dabei können übliche Radikalstarter eingesetzt werden. Der Anteil an Monomer im Isocyanat entspricht dabei der späteren Konzentration des thermoplastischen Polymers.

Dabei liegt die Lösung (a) als stabile, klare Lösung vor. Dabei bedeutet "klare Lösung", dass sich die Transmission der Lösung (a) bei 80 °C und 1 cm Schichtdicke nach Auflösen des thermoplastischen Polymers im Polyisocyanat um weniger als 50 % gegenüber dem reinen Isocyanat ändert. Vorzugsweise wird unter einer klaren Lösung eine Lösung verstanden, die einen Formazin Trübungswert (Formazin Turbidity Unit = FTU) gemessen nach DIN ISO 15715:2003 von kleiner 200 FTU besitzt. Bevorzugt besitzt die Lösung ein FTU-Wert von kleiner 100 und besonders bevorzugt von kleiner 50 FTU.

Die Lösung (a) weist dabei vorzugsweise eine Nullscherviskosität in Anlehnung an DIN FN ISO 3219 bei 25 °C von kleiner 110.000 mPas, besonders bevorzugt kleiner 75.000 mPas und besonders bevorzugt kleiner 50.000 mPas. Dabei bedeutet "Nullscherviskosität" die auf die Scherrate 0 extrapolierte Viskosität.

Die erfindungsgemäße Lösung (a) weist vorzugsweise einen NCO-Gehalt von größer 5 Gew.-%, besonders bevorzugt größer 7,5 Gew.-% auf.

Neben einem erfindungsgemäßen Verfahren ist auch die Lösung (a), enthaltend Polyisocyanat und thermoplastisches Polymer, Gegenstand der vorliegenden Erfindung.

Als höhermolekulare Verbindungen (b) mit mindestens zwei reaktiven Wasserstoffatomen können alle zur Polyurethanherstellung bekannten höhermolekularen Verbindungen (b) mit mindestens zwei reaktiven Wasserstoffatomen eingesetzt werden, beispielsweise können solche mit einer Funktionalität von 2 bis 8 und einem Molekulargewicht von 500 bis 12000 verwendet werden. So können beispielsweise Polyetherpolyamine und/oder Polyole, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus Alkandicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten oder Lactonen, vorzugsweise in Gegenwart eines Versterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

Als niedermolekulares Kettenverlängerungs- und/oder Vernetzungsmittel (c) werden Substanzen mit einem Molekulargewicht von kleiner 500 g/mol, vorzugsweise von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,2-Ethandiol, 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Dabei kann auch auf das Kettenverlängerungs- oder Vernetzungsmittel (c) verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Vorzugsweise weisen enthalten die Komponenten (b) und (c) mindestens eine Komponente mit einer Funktionalität von größer 2 besonders bevorzugt von größer 2,1 und insbesondere größer 2,3. Besonders bevorzugt ist die mittlere Funktionalität der Komponenten (b) und (c) größer als 2, mehr bevorzugt größer als 2,1 und insbesondere größer als 2,3. Durch die Funktionalität von größer 2 wird die Herstellung eines bevorzugten Polyurethans mit einer vernetzten Struktur erreicht.

Als Katalysatoren (d) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismut-octanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Die Katalysatoren können einzeln oder als Mischungen verwendet werden. Gegebenenfalls werden als Katalysatoren (d) Mischungen aus Metallkatalysatoren und basischen Aminkatalysatoren verwendet.

Insbesondere bei Verwendung eines größeren Polyisocyanatüberschusses kommen als Katalysatoren (d) ferner in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen Hydroxylgruppen.

Die Katalysatoren (d) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Ferner können bei der Herstellung erfindungsgemäßer Polyurethan-Hybridmaterialien Treibmittel (e) eingesetzt werden, wenn das Polyurethan als Polyurethan-Schaumstoff vorliegen soll. Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone und/oder Acetale.

Als weiteres Treibmittel können in einer Ausführungsform auch Mikrokugeln, die physikalisches Treibmittel enthalten, zugegeben werden.

Vorzugsweise werden die Treibmittel in einer Menge eingesetzt, dass die erhaltenen Polyurethanhybridmaterialien eine Dichte von 10 bis 1000 g/L aufweisen. Die genaue Dichte richtet sich dabei nach dem beabsichtigten Verwendungszweck.

Bei der Herstellung erfindungsgemäßer Verbundstoffe können weiter noch Hilfsmittel und/oder Zusatzstoffe (f) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind beispielsweise im "Kunststoffhandbuch, Band 7, Polyurethane", Carl Hanser Verlag, 3. Auflage 1993, Kapitel 3.4.4 und 3.4.6 bis 3.4.11 genannt.

Im Allgemeinen werden bei der Herstellung des erfindungsgemäßen Polyurethan-Hybridmaterials die organischen Polyisocyanate (a), die höhermolekularen Verbindungen mit mindestens zwei reaktiven Wasserstoffatomen (b) und gegebenenfalls die Kettenverlängerungs- und/oder Vernetzungsmittel (c) in solchen Mengen zur Umsetzung gebracht, dass das Äquivalenz-Verhältnis von NCO-Gruppen der Polyisocyanate (a) zur Summe der reaktiven Wasserstoffatome der Komponente (b), und gegebenenfalls (c) und (e) 0,85 bis 1,25:1, vorzugsweise 0,90 bis 1,15:1 beträgt. Falls die zelligen Polyurethan-Hybridmaterialien zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b), und gegebenenfalls (d) und (e) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (e) für die Herstellung von erfindungsgemäßen Polyurethan-Hybridmaterialien unterscheiden sich jeweils quantitativ und qualitativ nur geringfügig wenn als erfindungsgemäßes Polyurethan-Hybridmaterial ein thermoplastisches Polyurethan-Hybridmaterial, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethan-Hybridmaterials variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Bei der Herstellung der Polyurethane wird das thermoplastische Polymer jeweils zu der Isocyanatkomponente zugegeben, wobei sich die Mengenverhältnisse der übrigen Ausgangsstoffe zueinander vorzugsweise jeweils nicht oder nicht wesentlich ändern. Bezüglich spezieller Edukte für die Herstellung von Beschichtungen und Bindemitteln ist ebenfalls auf das "Kunststoffhandbuch, Band 7, Polyurethane", Carl Hanser Verlag, 3. Auflage 1993, Kapitel 10 und 12 verwiesen.

Ein weiterer Gegenstand der Erfindung ist ein System zur Herstellung von Polyurethan-Hybridmaterialien, enthaltend (a) eine erfindungsgemäße Lösung, enthaltend Polyisocyanat und thermoplastisches Polymer, (b) mindestens eine höhermolekulare Verbindung mit mindestens zwei reaktiven Wasserstoffatomen, und gegebenenfalls (c) niedermolekulare Kettenverlängerungsmittel und/oder Vernetzungsmittel, (d) Katalysator, (e) Treibmittel und (f) sonstigen Zusatzstoffe.

Ebenfalls Gegenstand der vorliegenden Erfindung ist ein Polyurethan-Hybridmaterial, wobei das Hybridmaterial ein Schaum mit einer Dichte von 10 bis 1000 g/L ist.

Ein erfindungsgemäßes Hybridmaterial weist hervorragende mechanische Eigenschaften auf und kann beispielsweise als Weichschaumstoff, Hartschaumstoff, Integralschaumstoff oder als kompaktes Material eingesetzt werden.

### Beispiele

### Verwendete Einsatzstoffe

- Polyol 1:: Polyetherol auf Basis von Glycerin, Propylenoxid und Ethylen- oxid mit einer OH-Zahl von 55 mg KOH/g, einen Ethylenoxid- Endcap und einer Viskosität von 500 mPas bei 25°C
- Polyol 2:: Polyetherol auf Basis von Glycerin, Propylenoxid und Ethylen- oxid mit einer OH-Zahl von 42 mg KOH/g, einen Ethylenoxid- Endcap und einer Viskosität von 950 mPas bei 25°C
- Polyol 3:: Polyetherol auf Basis von Glycerin, Propylenoxid und Ethylen- oxid mit einer OH-Zahl von 30 mg KOH/g, einen Ethylenoxid- Endcap und einer Viskosität von 1000 mPas bei 25°C
- Polyol 4:: Lupraphen® H928; Polyesterol der Firma Elastogran
- Polyol 5:: Lupranol® 1000; Polyetherol der Firma Elastogran
- Stabi 1:: Tegostab® B 8285 der Firma Goldschmidt
- KAT 1:: Dabco® 33 LV der Firma Air Products
- KAT 2:: Bis-(2-dimethylaminoethyl)ether 70%ig der Firma GE Silicones
- Additiv 1:: Niax® DP 1022 der Firma GE Silicones
- PMMA 1:: Polymethylmethacrylat Mw 15000 g/mol von Aldrich
- PMMA 2:: Polymethylmethacrylat Mw 120000 g/mol von Aldrich
- PMMA 3:: Polymethylmethacrylat Mw 350000 g/mol von Aldrich
- PMMA 4:: Polymethylmethacrylat Mw 1000000 g/mol von Aldrich
- PMMA 5:: Plexiglasplatte kommerziell erhältlich (Baumarkt) Stärke 0,5 cm
- Elvacite® 2008:: Poly(Methylmethacrylat-co-Methacrylsäure) 37000 g/mol von Lucite International
- Elvacite® 2044:: Polybutylmethacrylat 142000 g/mol von Lucite International
- SBR:: Styrol-Butadien-Rubber, Musterplatte bezogen von Rocholl GmbH
- ABS:: Acrylnitril-Butadien-Styrol, bezogen von Rocholl GmbH
- Lupranat® MI:: Mischung aus 2,4'und 4,4'MDI der Firma Elastogran GmbH
- Lupranat® MM103:: Carbodiimid modifiziertes 4,4-MDI der Firma Elastogran GmbH
- Lupranat® M20S:: Polymer-MDI-Mischung der Firma Elastogran GmbH
- Lupranat® M20W:: Polymer-MDI-Mischung der Firma Elastogran GmbH
- Basonat® H:: Hexamethylendiisocyanat der Firma BASF SE
- MMA:: Methylmethacrylat bezogen von Aldrich
- HEMA:: Hydroxyethylmethacrylat bezogen von Aldrich
- V65:: Azostarter der Firma Wako - Wako V65

Gemäß DE 69600279 ist niedermolekulares Poly(methylmethacrylat-co-butylmethacrylat) in verschiedenen Polyolen zu lösen. In den Vergleichsbeispielen V1 und V2 wurde versucht Polybutylmethacrylat (142000 g/mol) und in den Vergleichsbeispielen V3 und V4 Poly(methylmethacrylat-co-methacrylsäure) (37000 g/mol) einen Polyesterol oder Polyetherol zu lösen. Hierzu wurden 5g des Polymers in 95 g des entsprechenden Polyols dispergiert und bei 80°C 2 Tage gerührt.

| Versuch | Polymer | Polyol | Löslichkeit |
|---|---|---|---|
| V1 | Elvacite® 2044 | Polyol 4 | - |
| V2 | Elvacite® 2044 | Polyol 5 | - |
| V3 | Elvacite® 2008 | Polyol 4 | - |
| V4 | Elvacite® 2008 | Polyol 5 | - |

| | | | |
|---|---|---|---|
| + völlig löslich; - unlöslich | | | |

Wie aus den Vergleichbeispielen ersichtlich ist, sind die entsprechenden thermoplastischen Polymere nicht in den Polyolen löslich. Es wurde überraschenderweise gefunden, dass sich die thermoplastischen Polymere in Isocyanaten wie MDI auflösen lassen. Hierzu wurde versucht 5g Polybutylmethacrylat (142000 g/mol) oder Poly(methylmethacrylat-co-methacrylsäure) (37000 g/mol) in 95 g Lupranat MI, MM103, oder Basonat H bei 80°C zu lösen.

| Versuch | Polymer | Isocyanat | Löslichkeit |
|---|---|---|---|
| B1 | Elvacite® 2044 | Lupranat MI | + |
| B2 | Elvacite® 2008 | Lupranat MI | + |
| B3 | PMMA 120000 g/mol | Lupranat MI | + |
| B4 | PMMA 120000 g/mol | Lupranat MM103 | + |
| B5 | PMMA 120000 g/mol | Basonat H | + |

| | | | |
|---|---|---|---|
| + völlig löslich; - unlöslich | | | |

Es zeigte sich, dass das die thermoplastischen Polymere in den Beispielen B1-B5 vollständig in den Isocyanaten lösten.

Überraschender Weise wurde gefunden, dass eine radikalische Polymerisation von Methylmethacrylat in den Isocyanaten zu transparenten, erfindungsgemäßen Lösungen führt. Dies soll im Beispiel 6 und Beispiel 7erläutert werden.

### Beispiel 6: radikalische Polymerisation von MMA in Lupranat M20S

In einen 2L Vierhalskolben wurden 1800g Lupranat M20S vorgelegt. 1g Azostarter der Firma Wako (Waka V65) wurden in 200 g Methylmethacrylat gelöst und den Lupranat M20S zugesetzt. Die Mischung wurde auf 70°C erhitzt und 3 Stunden bei 70°C gerührt. Als dann wurden 0,75 g Wako V65 dem System zugesetzt und weitere 2 Stunden bei 70°C gerührt. Danach wurde die Reaktionsmischung auf 85°C aufgeheizt und eine weitere Stunde bei 85°C gerührt und anschließend abgekühlt. Das entstandene Produkt zeigte eine deutlich höhere Viskosität als Lupranat M20S und war durchsichtig. Auch nach 4 wöchiger Lagerung zeigte das Produkt keinerlei Trübung.

### Beispiel 7: radikalische Polymerisation von MMA und HEMA in Lupranat MI

In einen 2L Vierhalskolben wurden 1800g Lupranat MI vorgelegt. 1g Azostarter der Firma Wako (Waka V65) wurden in 198 g Methylmethacrylat und 2 g Hydroxyethylmethacrylat gelöst und den Lupranat MI zugesetzt. Die Mischung wurde auf 70°C erhitzt und 3 Stunden bei 70°C gerührt. Als dann wurden 0,75 g Wako V65 dem System zugesetzt und weitere 2 Stunden bei 70°C. Danach wurde die Reaktionsmischung auf 85°C aufgeheizt und eine weitere Stunde bei 85°C gerührt und anschließend abgekühlt. Das entstandene Produkt zeigte eine deutlich höhere Viskosität als Lupranat MI und war durchsichtig. Auch nach 4 wöchiger Lagerung zeigte das Produkt keinerlei Trübung.

Die Löslichkeit der thermoplastischen Polymere in Isocyanaten ist unabhängig vom Molekulargewicht. Dies soll durch die nachfolgenden Beispiele B8 - B11 erläutert werden. Dazu wurden jeweils 2,5g Polymethylmethacrylate mit unterschiedlichen Molekulargewichten in 97,5 g Lupranat MI gegeben und bei 60°C gelöst.

| Versuch | Mw PMMA | Isocyanat | Löslichkeit |
|---|---|---|---|
| B8 | 15000 g/mol | Lupranat MI | + |
| B9 | 120000 g/mol | Lupranat MI | + |
| B10 | 350000 g/mol | Lupranat MI | + |
| B11 | 1000000 g/mol | Lupranat MI | + |

| | | | |
|---|---|---|---|
| + völlig löslich; - unlöslich | | | |

Alle Polymere lösten sich vollständig in Lupranat MI. Es entstand eine klare Lösung. Die Dauer des Lösevorgangs wurde mit zunehmendem Molekulargewicht größer.

Es sind allerdings nicht nur Polymethymethacrylat Homo- oder Copolymere in Isocyanaten löslich sondern auch andere thermoplastische Polymere. Dies soll in den nachfolgenden Beispielen gezeigt werden. Hierzu wurden 1 g des jeweiligen Polymers in 99g Lupranat MI bei 60°C gelöst.

| Versuch | Polymer | Isocyanat | Löslichkeit |
|---|---|---|---|
| B12 | Styrol-Butadien-Rubber | Lupranat MI | + |
| B13 | Acrylnitril-Butadien-Styrol | Lupranat MI | + |

| | | | |
|---|---|---|---|
| + völlig löslich; - unlöslich | | | |

Es wurde gefunden, dass sich die Styrolcopolymere SBR und ABS (B10 und B11) in Lupranat MI auflösen lassen.

Die thermoplastischen Polymere sind ferner auch in hohen Konzentrationen in den Isocyanaten löslich. Hierzu wurde Polybutylmethacrylat (Elvacite 2044) in verschiedenen Konzentration in Lupranat MI gelöst und die Viskosität bei Raumtemperatur bestimmt.

| Beispiel | Anteil an PBMA in Lupranat MI | Viskosität [mPas] @25°C |
|---|---|---|
| B14 | 0 | 22 |
| B15 | 2,5 | 71 |
| B16 | 5,0 | 82 |
| B17 | 10,0 | 330 |
| B18 | 20,0 | 3600 |
| B19 | 30,0 | 15500 |
| B20 | 40,0 | 100000 |

Alle hergestellten Lösungen waren transparent. Mit zunehmendem Anteil stieg die Viskosität.

Die Vorteile der erfindungsgemäßen Lösungen von thermoplastischen Polymeren in Isocyanaten in Polyurethan-Systemen sollen in dem nachfolgenden Beispiel erläutert werden.

Eine handelsübliche Plexiglas-Platte (PMMA-Platte) wurde in einer Mühle in kleine PMMA-Partikel zermahlen. Die PMMA-Partikel wurden in Lupranat MI bei 60°C gelöst, so dass eine 5 Gew.-%ige Lösung von PMMA in Lupranat MI entstand. Zu dieser PMMA-Lupranat MI Lösung wurde Lupranat M20W und Diglycol-bis-Chlorformiat, ein in der Polyurethanchemie übliches Additiv zur Neutralisation von Resten des Alkalischen Katalysators aus der Polyetherolherstellung, gegeben. Nach 5 Minuten wurde der Lösung das Polyol 1 zugesetzt und weitere 2 Stunden bei 60°C gerührt. Die genauen Konzentrationen im Prepolymer sind der nachfolgenden Tabelle aufgeführt. Das Referenzprepolymer wurde analog, jedoch ohne den Einsatz von PMMA hergestellt.

| | V5 (ISO A - Referenz) | B21 (ISO B erfindungsgemäße Lösung) |
|---|---|---|
| Lupranat MI | 74,7 | 71,0 |
| PMMA | 0 | 3,7 |
| Lupranat M20W | 12,4 | 12,4 |
| Diglycol-bis-Chlorformiat | 0,01 | 0,01 |
| Polyol 1 | 12,89 | 12,89 |

Mit den Prepolymer (ISO A oder ISO B) wurden Polyurethanschäume hergestellt. Dazu wurden das Prepolymer mit einer A-Komponente vermischt (Index 90) und in eine offene Aluminiumkiste mit den Maßen 40x40x50 cm geben und ausreagieren lassen. Die Zusammensetzung der A-Komponente ist der nachfolgenden Tabelle zu entnehmen.

| Komponente | Anteil [%] |
|---|---|
| Polyol 2 | 83,62 |
| Polyol 3 | 9,29 |
| Wasser | 2,88 |
| Stab 1 | 0,93 |
| Kat 1 | 0,42 |
| Kat 2 | 0,07 |
| Additive 1 | 2,79 |

Die entstandenen Schäume zeigten folgende mechanischen Eigenschaften

| Verwendete ISO | V6 ISO A (V5) | B22 ISO B (B21) |
|---|---|---|
| Raumgewicht [g/L] | 38,4 | 39,0 |
| Eindruckhärte [N] | 51 | 56 |
| Rückprallelastizität [%] | 12 | 12 |
| Zugfestigkeit [kPa] | 27 | 38 |
| Dehnung [%] | 132 | 158 |

Wie aus den Beispielen V6 und B22 zu sehen ist, führt der Einsatz der erfindungsgemäßen Lösung von thermoplastischen Polymeren in Polyurethansystemen zu Verbesserten mechanischen Eigenschaften wie Härte, Zugfestigkeit oder Dehnung.

### Normen für mechanische Charakterisierung

| | |
|---|---|
| Zugfestigkeit / Dehnung | DIN EN ISO 527-1 |
| Eindruckhärte | DIN EN ISO 2439 |
| Rückprallelastizität | DIN EN ISO 8307 |

## Patentansprüche

1. Lösung, enthaltend Polyisocyanat und thermoplastisches Polymer, wobei die Lösung im Wesentlichen keine weiteren Lösungsmittel enthält, und die Nullscherviskosität bei 25 °C kleiner als 110.000 mPas ist.

2. Lösung nach Anspruch 1, **dadurch gekennzeichnet, dass** der Anteil an thermoplastischem Polymer 0,1 bis 50 Gew.-%, bezogen auf das Gesamtgewicht von Polyisocyanats und thermoplastischem Polymer in gelöster Form beträgt.

3. Lösung nach Anspruch 1 oder 2, **dadurch gekennzeichnet, dass** das Polyisocyanat ein aromatisches Di- und/oder Polyisocyanat ist.

4. Lösung nach Anspruch 1 oder 2, **dadurch gekennzeichnet, dass** das Polyisocyanat ein aliphatisches Di- und/oder Polyisocyanat ist.

5. Lösung nach Anspruch 1-4, **dadurch gekennzeichnet, dass** die Lösung einen NCO-Anteil von größer 5 Gew.-% aufweist.

6. Lösung nach einem der Ansprüche 1 bis 5, **dadurch gekennzeichnet, dass** das thermoplastische Polymer ausgewählt ist aus Homopolymeren der C1-bis C20 Ester der (Meth)acrylsäure Copolymeren der C1-bis C20 Ester der (Meth)acrylsäure, Styrol-Butadien-Copolymeren, Acrylnitril-Butadien-Styrol-Copolymeren, Butadien-copolymeren oder Mischungen aus zwei oder mehreren dieser thermoplastischen Polymere.

7. Verfahren zur Herstellung einer Lösung nach einem der Ansprüche 1 bis 6, **dadurch gekennzeichnet, dass** thermoplastisches Polymer und Polyisocyanat vermischt wird.

8. Verfahren zur Herstellung einer Lösung nach Anspruch 1 bis 6, **dadurch gekennzeichnet, dass** die Monomere zur Herstellung des thermoplastischen Polymers in Isocyanat gelöst und anschließend radikalisch zum thermoplastischen Polymer polymerisiert werden.

9. System zur Herstellung von Polyurethan-Hybridmaterialien, enthaltend
a) eine Lösung gemäß einem der Ansprüche 1 bis 6,
b) mindestens eine höhermolekulare Verbindung mit mindestens zwei reaktiven Wasserstoffatomen, und gegebenenfalls
c) niedermolekulare Kettenverlängerungsmittel und/oder Vernetzungsmittel,
d) Katalysator
e) Treibmittel und
f) sonstigen Zusatzstoffe.

10. System nach Anspruch 9, **dadurch gekennzeichnet, dass** die Komponenten b) und c) mindestens eine Verbindung mit einer Funktionalität größer als 2,0 enthalten.

11. Verfahren zur Herstellung von Polyurethan-Hybridmaterialien bei dem man
a) eine Lösung gemäß einem der Ansprüche 1 bis 6 mit,
b) mindestens einer höhermolekularen Verbindung mit mindestens zwei reaktiven Wasserstoffatomen, und gegebenenfalls
c) niedermolekularem Kettenverlängerungsmittel und/oder Vernetzungsmittel,
d) Katalysator
e) Treibmittel und
f) sonstigen Zusatzstoffe
zu einer Reaktionsmischung vermischt und die Reaktionsmischung zum Polyurethan-Hybridmaterial ausreagieren lässt.

12. Verfahren nach Anspruch 11, **dadurch gekennzeichnet, dass** die Komponenten b) und c) mindestens eine Verbindung mit einer Funktionalität größer als 2,0 enthalten.

13. Hybridmaterial, erhältlich nach einem Verfahren gemäß einem der Ansprüche 11 oder 12, wobei das Hybridmaterial ein Schaum mit einer Dichte von 10 bis 1000 g/L ist.

14. Hybridmateral, erhältlich nach einem der Ansprüche 11 oder 12, **dadurch gekennzeichnet, dass** im Wesentlichen kein Treibmittel eingesetzt wird.
